(19) **Europäisches Patentamt**
**European Patent Office**
**Office européen des brevets**

(11) **EP 4 020 394 A1**

(12) **EUROPEAN PATENT APPLICATION**

(43) Date of publication:
**29.06.2022  Bulletin 2022/26**

(21) Application number: **21198752.4**

(22) Date of filing: **24.09.2021**

(51) International Patent Classification (IPC):
**G06T 7/80** (2017.01)

(52) Cooperative Patent Classification (CPC):
**G06T 7/85;** G06T 2207/10012; G06T 2207/30228

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **22.12.2020  US 202017131700**

(71) Applicant: **INTEL Corporation**
**Santa Clara, CA 95054 (US)**

(72) Inventors:
• **WEISER, Or**
  **69710 Tel Aviv (IL)**

• **KAUFMAN, Itay**
  **69710 Tel Aviv (IL)**
• **AVNAT, Zohar**
  **5245410 Ramat Gan (IL)**
• **LAZAR, Roee**
  **5324211 GIVATAYIM (IL)**
• **KHAZOV, Danny**
  **7630819 Rehovot (IL)**

(74) Representative: **HGF**
**HGF Limited**
**1 City Walk**
**Leeds LS11 9DX (GB)**

(54) **METHODS AND APPARATUS TO PERFORM MULTIPLE-CAMERA CALIBRATION**

(57)     Methods, apparatus, systems and articles of manufacture are disclosed to show a multiple-camera calibration without an initial guess. An example method includes calculating a homography for a camera pair, the homography created using common image plane coordinate matches of identified features and identified focal lengths of cameras of the camera pair, decomposing the homography to identify relative translations, rotations, and surface normals; solving a minimization for camera centers of the cameras, and calibrating the cameras using the cameras positions and orientations.

FIG. 1

EP 4 020 394 A1

## Description

### FIELD OF THE DISCLOSURE

This disclosure relates generally to immersive realities, and, more particularly, to methods and apparatus to perform multiple-camera calibration.

### BACKGROUND

Immersive realities: virtual reality (VR), augmented reality (AR), and mixed reality (MR) are shaping multiple industries and everything from marketing to retail and training to education, is being fundamentally changed by technology. To create these immersive realities, camera parameter estimations, high quality image feeds, and high quality video feeds are needed, which is currently solved through a sensor-based approach or through an additive bundle adjustment approach.

A sensor-based approach to multiple-camera calibration, such as inertial navigation system (INS), is one manner for performing automated calibration of multiple cameras. Sensor-based systems are equipped with sensors such as inertial measurement unit (IMU) or a global positioning system (GPS), raising the cost of each device tremendously. Additionally, the INS system and the GPS system typically do not provide a target level of accuracy for performing multiple-camera calibration.

Another approach to camera calibration is an additive bundle adjustment. Additive bundle adjustment calculates a bundle adjustment between two cameras, and then adds camera after camera to the adjusted bundle.

### BRIEF DESCRIPTION OF THE DRAWINGS

FIG. 1 is a block diagram overview of an example image acquisition and processing system.

FIG. 2 is a block diagram of the example camera orientation calibrator of FIG. 1.

FIG. 3 is an example of the position and orientation calculator as shown in FIG. 1.

FIG. 4 is a flowchart representative of machine-readable instructions which may be executed to carry out multiple-camera calibration.

FIG. 5 is a flowchart representative of machine-readable instructions which may be executed to solve camera orientations.

FIG. 6 is a flowchart representative of machine-readable instructions which may be executed to solve camera locations.

FIG. 7 is a diagram showing connectivity and edges between cameras in an example scene.

FIG. 8 is a block diagram of an example processing platform structured to execute the instructions of FIGS. 4, 5, and/or 6 to implement multiple-camera calibration.

FIG. 9 is a block diagram of an example processing platform structured to execute the instructions of FIGS. 4, 5, and/or 6 to implement multiple-camera calibration.

The figures are not to scale. In general, the same reference numbers will be used throughout the drawing(s) and accompanying written description to refer to the same or like parts. Connection references (e.g., attached, coupled, connected, and joined) are to be construed broadly and may include intermediate members between a collection of elements unless otherwise indicated. As such, connection references do not necessarily infer that two elements are directly connected and in fixed relation to each other. Stating that any part is in "contact" with another part means that there is no intermediate part between the two parts. Although the figures show layers and regions with clean lines and boundaries, some or all of these lines and/or boundaries may be idealized. In reality, the boundaries and/or lines may be unobservable, blended, and/or irregular.

### DETAILED DESCRIPTION

Descriptors "first," "second," "third," etc., are used herein when identifying multiple elements or components which may be referred to separately. Unless otherwise specified or understood based on their context of use, such descriptors are not intended to impute any meaning of priority, physical order or arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

Immersive realities give users the perception of being physically present in a non-physical world. The perception is created by surrounding the user of the immersive reality system in images, sound or other stimuli that provide a total environment. Creation of these immersive realities requires high quality image and video feeds, which require methods such as calibration of cameras that are observing an event and creating the video feed. Calibrating multiple-cameras allows for high quality immersive realities to be created for multiple industries.

The methods and apparatus to perform multiple-camera calibration without an initial guess, as described herein, may be used in many different ways in many different use cases. For example, the teachings of this disclosure may be used in planar environments and cold start environments. A planar environment is a situation in which most of a scene being observed (e.g., a playing field) by multiple cameras is composed from at least one plane. In cases of planar environments, some multiple view algorithms are not feasibly used in such vision systems.

A cold start environment is a situation in which sensors are not stationary or do not include auxiliary devices, such as INS, for localization. As such, cold start systems do not have an initial guess that can be used for multiple-camera calibration.

In contrast to camera calibration by bundle adjustment, which tends to be unstable and inaccurate especially in wide base-line case, the systems and methods described herein are stable and accurate. In bundle adjustment, the solving stage is being called many times, thus, making the entire process very time wasteful, and dependent on both the order of the cameras and an accurate initial guess. Overall, bundle adjustments are non-robust and unstable. The systems and methods disclosed herein are robust, stable, and efficient.

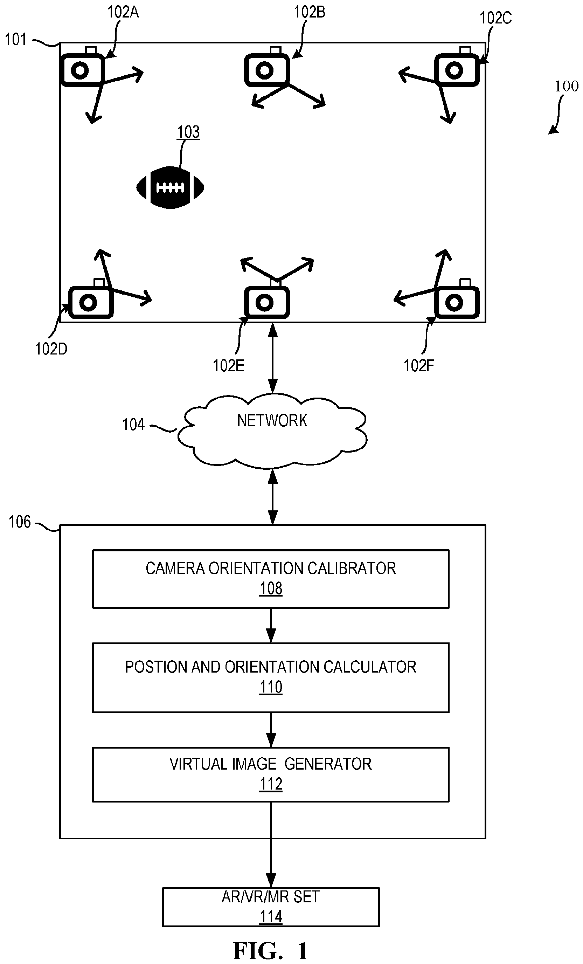

FIG. 1 is a block diagram of an example image acquisition and processing system 100. The system 100 includes a scene 101 being observed by multiple cameras 102A, 102B, 102C, 102D, 102E, 102F that are focused on a stationary focal point that is used as a reference point 103. The example cameras 102A, 102B, 102C, 102D, 102E, 102F are connected to a network 104, which is connected to an example image processor 106.. In the example of FIG. 1, the image processor 106 includes a camera orientation calibrator 108, a position and orientation calculator 110, and a virtual image generator 112. The output of the example image processor 106 is coupled to an AR/VR/MR set 114.

The example, scene 101 of FIG. 1 is an environment to be converted to an immersive reality. For example, the scene 101 may be a sports game (e.g., a football game), or may be a scene to be presented in an action/adventure video game, etc. Any example scene 101 may be utilized.

The example cameras 102A, 102B, 102C, 102D, 102E, 102F may be implemented using any camera, such as an internet protocol (IP) camera. The example cameras 102A, 102B, 102C, 102D, 102E, 102F are located around the example scene 101 and has a different viewing angle from which the example camera 102A, 102B, 102C, 102D, 102E, 102F views the scene 101. A view from each example camera 102A, 102B, 102C, 102D, 102E, 102F overlaps with a view from at least one other example camera 102A, 102B, 102C, 102D, 102E, 102F to facilitate creation of an immersive reality.

As described herein, an example of multiple-camera calibration without an initial guess involves first grabbing a synchronized shot from all the example cameras 102A, 102B, 102C, 102D, 102E, 102F in the example scene 101, where the focal lengths of the example cameras 102A, 102B, 102C, 102D, 102E, 102F are approximately known. This environment contains example multiple cameras 102A, 102B, 102C, 102D, 102E, 102F having overlapping views of the example scene 101.

The example scene 101 also includes a reference point 103, which can be, for example, a stationary object or a specific marked corner of a sports field or a marked line in a field. In the example, of FIG. 1 a ball, such as a football, is shown as the example reference point 103; however, any suitable object or feature may be used as the example reference point 103. For example, a tree in the example scene may be utilized as a reference point. In another example, a person may designate the reference point 103 and the example cameras 102A, 102B, 102C, 102D, 102E, 102F will use it as a reference point.

The example network 104 may be implemented utilizing any public and/or private network that facilitates communication between the example cameras 102A, 102B, 102C, 102D, 102E, 102F and the image processor 106. For example, all or part of the network 104 may be implemented utilizing the Internet. The example network 104 also facilitates indicating to the example image processor 106 the example reference point 103.

The example image processor 106 may be implemented utilizing any suitable processing hardware. For example, the image processor 106 may be implemented using a server, a computer, or any suitable combination thereof. In the example of FIG. 1, the example image processor 106 receives data from the example network 104 and implements at least one example camera orientation calibrator 108, the example position and orientation calculator 110, and the example virtual image generator 112. The example image processor 106 may implement additional functionality, or the example camera orientation calibrator 108, the example position and orientation calculator 110, and the example virtual image generator 112 may be implemented using different or additional image processors.

The camera orientation calibrator 108, which is shown as implemented as part of the image processor 106 in the example of FIG. 1, receives data from the network 104. For example, the example camera orientation calibrator 108 receives inputs from the example network 104 that are used to determine the locations and orientations of the example cameras 102A, 102B, 102C, 102D, 102E, 102F.

In one example, the example camera orientation calibrator 108 solves for camera locations to first find the global rotations in a coordinate system. For example, the camera orientation calibrator 108 identifies the location (e.g., orientation) of a first example camera such that the location is (0,0,0) and identifies the location (e.g., orientation) of a second example camera such that the location is 1 in arbitrary units. The example camera orientation calibrator 108 is able calculate the distance between the example cameras.

After the global rotations are known, the relative translations are determined by decoupling the global rotations from the relative translation and get: $t_{ij} \sim (c_i - c_j)$. It is necessary to find the camera centers $c_i$. Therefore,

the system defines and solves an optimization problem to, for example, determine the following energy:

$$\sum_{ij\epsilon E} \rho\left(\left|\widehat{t_{ij}} \times (c_i - c_j)\right|^2\right)$$ where $\widehat{t_{ij}}$ is the relative translation with unit length, and $\rho$ is a loss function such as soft $L_1$ loss.

In the example of FIG. 1, the position and orientation calculator 110 receives information from the example network 104. The example orientation calculator 110 also receives locations and orientations of the example cameras 102A, 102B, 102C, 102D, 102E, 102F from the example camera orientation calibrator 108. As described below in detail, the received information is used to calculate homographies of camera pairs and output each edges of camera views. Any two images of the same planar surface in a space are related by a homography. Homography may also be defined as projectivity, projective transformation, and projective collineation. The position and orientation calculator 110 also solves for relative rotation, relative translation, and surface normal of each camera locations and orientations of the cameras 102A, 102B, 102C, 102D, 102E, 102F, and removes outliers. In some examples, cameras that do not have a surface normal to other cameras are referred to as outliers. In some examples, the position and orientation calculator 110 solves a minimization problem, and outputs a global position and the orientation of each camera 102A, 102B, 102C, 102D, 102E, 102F to the virtual image generator 112.

The virtual image generator 112, which may be implemented as part of the image processor 106, receives input from the position and orientation calculator 110 and generates an image for the immersive reality using the data received from the network 104, the camera orientation calibrator 108, and from the position and orientation calculator 110. For example, the virtual image generator 112 may combine feeds from multiple cameras using the generated information. This generates an immersive reality that is sent to be displayed on the AR/VR/MR set 114.

The AR/VR/MR set 114, which may be a headset, or one or more screens, uses the data from the virtual image generator and displays the scene 101 to a user.

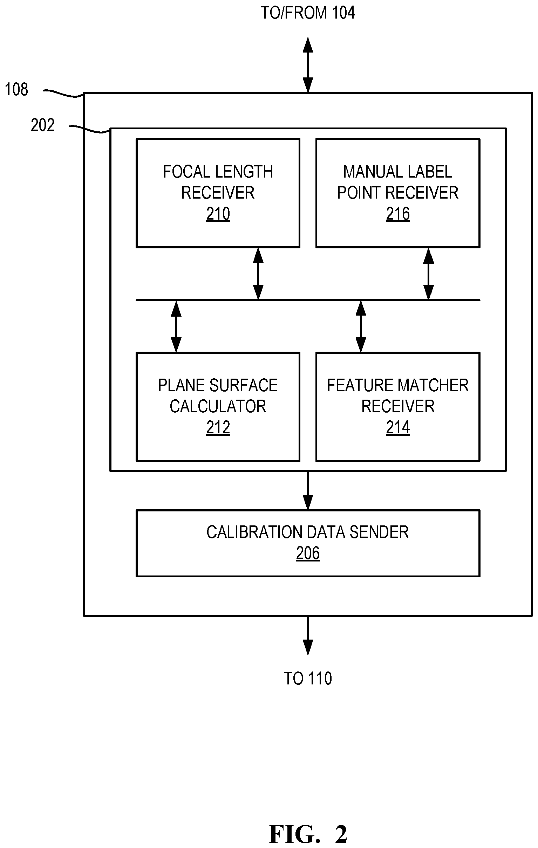

FIG. 2 shows additional detail of one example implementation of the camera orientation calibrator 108 of FIG. 1, other examples are possible. The example camera orientation calibrator 108 of FIG. 2 includes a calibration data receiver 202, a camera location solver 204, and a calibration data sender 206. In the example, of FIG. 2, the camera data receiver 202 includes a focal length receiver 210, a plane surface calculator 212, a feature matcher receiver 214, and a manual label point receiver 216. In some examples, the camera data receiver 202 is a calibration data receiver.

The example camera orientation calibrator 108 receives information from the example network 104. The network 104 passes data from the example cameras 102A, 102B, 102C, 102D, 102E, 102F to the example camera orientation calibrator 108. Using the data from the example cameras 102A, 102B, 102C, 102D, 102E, 102F, the example camera data receiver 202 determines the focal length of each example camera 102A, 102B, 102C, 102D, 102E, 102F using the example focal length receiver 210.

The example plane surface calculator uses data from the cameras 102A, 102B, 102C, 102D, 102E, 102F to automatically calculate the planar surface input. The example camera data receiver 202 receives the plane surface from the example plane surface calculator 212.

Using the data from the cameras 102A, 102B, 102C, 102D, 102E, 102F, the example feature matcher receiver 214 of the example camera data receiver 202 matches overlapping features of each example camera 102A, 102B, 102C, 102D, 102E, 102F.

Using the data from the example network 104, the example camera data receiver 202 obtains the manual label point, such as the example reference point 103 (e.g., stationary object 103) using the example manual label point receiver 216. The data from the example camera data receiver 202 is sent to the example calibration data sender 206, which consolidates the data and sends it to the example position and orientation calculator 110.

The example camera data receiver 202 receives an input from the example network 104. The example calibration data receiver 202 receives multiple inputs. Examples of inputs include the focal length in the example focal length receiver 210, the manual label point in the example manual label point receiver 216, the plane surface in the example plane surface calculator 212, and the feature matcher in the feature matcher receiver 214. The example camera orientation calibrator 108 then sends the output of the example camera data receiver 202 to the example calibration data sender 206. The example camera orientation calibrator sends its output to the example position and orientation calculator 110.

While an example manner of implementing the camera orientation calibrator 108 of FIG .1 is illustrated in FIG. 2, one or more of the elements, processes and/or devices illustrated in FIG. 2 may be combined, divided, re-arranged, omitted, eliminated and/or implemented in any other way. Further, the example calibration data sender 206, the example focal length receiver 210, the example plane surface calculator 212, the example feature matcher receiver 214, the example manual label point receiver 216, and/or, more generally, the example camera orientation calibrator 108 of FIG. 2 may be implemented by hardware, software, firmware and/or any combination of hardware, software and/or firmware. Thus, for example, any of the example calibration data sender 206, the example focal length receiver 210, the example plane surface calculator 212, the example feature matcher receiver 214, the example manual label point receiver 216, and/or, more generally, the example camera orientation calibrator 108 of FIG. 2 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example calibration data sender 206, the example focal length receiver 210, the example plane surface calculator 212, the example feature matcher receiver 214, and/or the example manual label point receiver 216 is/are hereby expressly defined to include a non-transitory computer readable storage device or storage disk such as a memory, a digital versatile disk (DVD), a compact disk (CD), a Blu-ray disk, etc. including the software and/or firmware. Further still, the example camera orientation calibrator 108 of FIG. 1 may include one or more elements, processes and/or devices in addition to, or instead of, those illustrated in FIG. 2, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

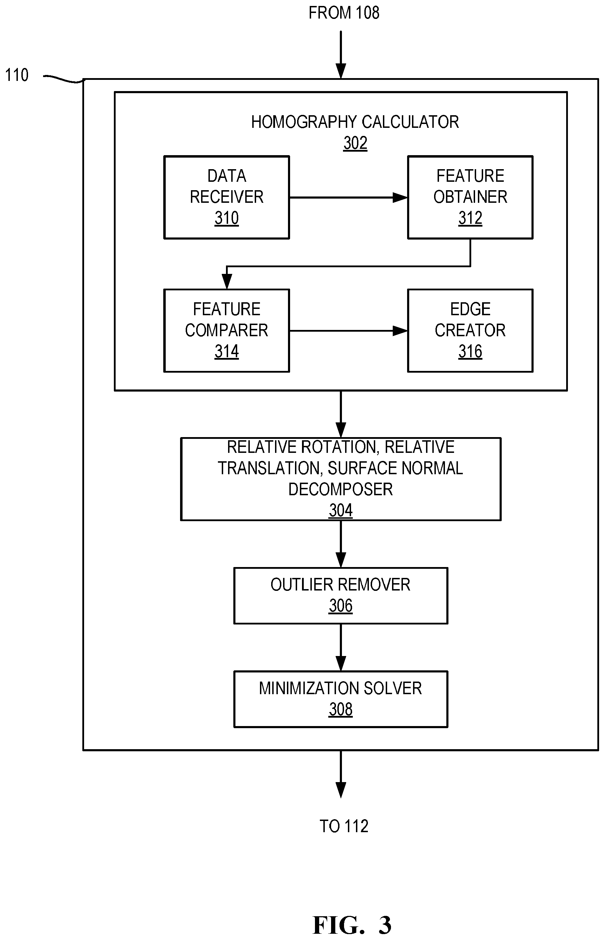

FIG. 3 shows one example of the position and orientation calculator 110 of FIG. 2. In the example of FIG. 3, the position and orientation calculator 110 includes a homography calculator 302, a relative rotation, relative translation, surface normal decomposer 304, an outlier remover 306, and a minimization solver 308.

As shown in the example of FIG. 3, the homography calculator 302 includes a data receiver 310, a feature obtainer 312, a feature comparer 314, and an edge creator 316. The example data receiver 310 receives data from the output of example calibration data sender 206. The example data receiver 310 sends the data to the example feature obtainer 312, which obtains all the features from the multiple example cameras 102A, 102B, 102C, 102D, 102E, 102F of the example scene 101. The example feature obtainer 312 sends the features to the example feature comparer 314, which compares all the features from the example scene 101. The example feature comparer 314 sends the output to the example edge creator 316. The example edge creator 316 maps out edges (e.g., edges linked to cameras which have overlapping views) and a relative location of each camera location. The example homography calculator 302 then sends the output of the example edge creator 316 to the example relative rotation, relative translation, surface normal decomposer 304.

The example relative rotation, relative translation, surface normal decomposer 304 calculates the relative rotation, relative translation, surface normal by constructing and decomposing the values. The example relative rotation, relative translation, surface normal decomposer 304 sends the output to the example outlier remover 306, which removes outliers from the data. Then, the example outlier remover 306 sends the remaining output to the example minimization solver 308, which calculates a minimization problem. Then the example position and orientation calculator 110 sends the output of the example minimization solver 308 to the example virtual image generator 112, which generates a virtual image of the entire example scene 101. The output of the virtual image generator 112 is then sent and displayed on the example AR/VR/MR set 114.

The example position and orientation calculator 110 receives input data from the example camera orientation calibrator 108. The example position and orientation calculator 110 first uses the data to solve for the homography between camera pairs using a homography calculator 302. The example homography calculator 302 receives data from the example camera orientation calibrator 108 using the example data receiver 310. The homography calculator 302 sends the data to the example feature obtainer 312, which gets data about all the features in the scene. Then, the example feature obtainer 312 sends the features to the example feature comparer 314, which analyzes the features in the scene and identifies common features. The example feature comparer 314 sends the common features to the example edge creator 316.

The edge creator 316 determines edges between pairs of cameras to determine overlapping image feeds using the reference points to determine proper overlap points.

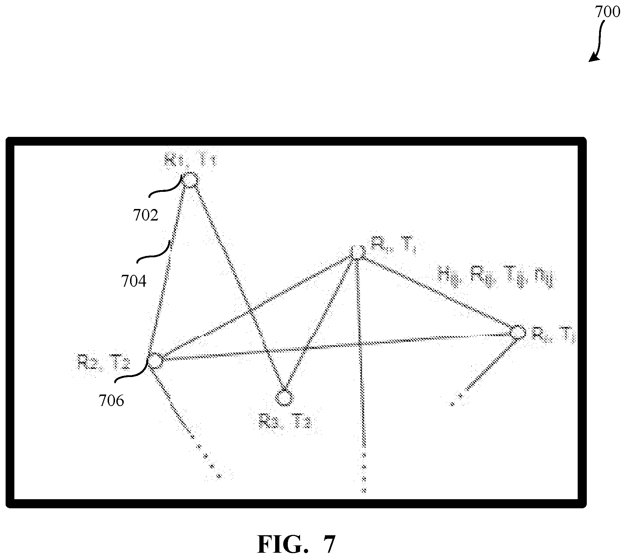

A graph can be defined where the vertices are the cameras as shown in FIG. 7. A first vertex 702 and a second vertex 706 can establish an edge 704 between two cameras when the two cameras agree on overlapping reference points (e.g., the example reference point 103).

For each edge, (e.g., pair of cameras with multiple (e.g., 4, 6, 8, etc.) matches) the homography is calculated between matches of the points on the image's plane. Due to the fact that all the cameras are looking at the same plane and their transformation is between image plane coordinates, the homography can be written as: $H = \gamma(R + t \cdot n^T)$, where $\gamma$ is an arbitrary non-zero number, R is the relative rotation from first camera to second one, t is the relative camera displacement from the first camera to the second camera in the rotated space, scaled proportionally, and n is the plane normal from the frame system of the first camera.

The example homography calculator 302 uses the created edges and feeds them to the relative rotation, relative translation, surface normal decomposer 304. Knowing the focal lengths of the cameras, the homographies can be constructed and can be decomposed into relative rotations and translations. This can be done as described in Faugeras' singular value decomposition (SVD)-based method and implemented in, for example, OpenCV. This approach results in a number (e.g., 4) of physically possible solutions for the relative rotation, translation and surface normal per homography. By defining the cameras to be above the plane (e.g., surface normals point toward camera centers), the number of possible solutions is reduced (e.g., to two).

The example relative rotation, relative translation, surface normal decomposer 304 is used to find the relative rotation, relative translation, and surface normal of each camera. Using the edges calculated in the example edge creator 316, the example relative rotation, relative translation, surface normal decomposer 304 solves for the relative rotation, relative translation, and surface normal of each example camera. Using the solutions, the example relative rotation, relative translation, surface normal decomposer 304 decomposes the values and sends the data to the example outlier remover 306.

The example outlier remover 306 receives the solutions that were decomposed and compares the received solutions. By selecting triplets of connected vertices, the example relative rotation, relative translation, surface normal decomposer 304 requires that pairs agree on the same surface normal. In some cases, the normal from the second camera is measured so that the corresponding relative rotation is applied on the normal. The solutions (e.g., four solutions) given by the homography decomposition are reduced to a single solution of a relative rotation and translation between two agreeing cameras.

If by the end of the process of eliminating solutions, there exist relative geometries with more than one solution, the relative geometries did not agree with any other relative geometry on the plane normal. Such results are considered an outlier and are removed by the example outlier remover 306, which sends the remaining solutions to the example minimization solver 308.

The example minimization solver 308 solves for the camera orientation. To solve camera orientations, the example minimization solver 308 solves the absolute rotations in a coordinate system aligned with the first camera (or any other camera). Quaternions are used to represent rotations due to increased numerical stability, compared to other rotation representations such as $SO(3)$. However, quaternion representation has a global sign ambiguity. To overcome the sign ambiguity, a rough initial guess is used for the rotation that is obtained by a Hamiltonian path. A Hamiltonian path is a path that visits every vertex once with no repeats. However, the Hamiltonian path does not need to start and end at the same vertex. Starting from the first camera (with rotation set to identity (e.g., (0,0,0)), each of the edges on the graph are visited until the path visits all vertices of the graph. During the process, the global rotation of each example camera visited is set by applying the relevant relative rotation. The result is a rough estimation for the global rotation of each camera, represented as a quaternion $\widehat{q_i}$. Since most of the data is not included in the Hamiltonian path, this initial guess is considered rough and noisy.

Phase one to solve camera orientations involves converting the relative rotations to a quaternion representation. The sign ambiguity is set using the initial guess. The relative rotation from camera $j$ to camera $i$ as $q_{ij}$ is marked and the relative rotation is estimated from the initial guess $\widehat{q_{ij}} = \widehat{q_i} \cdot \widehat{q_j^{-1}}$. The sign that is closer in the sense of quaternion norm is chosen as arg min $\left( \left| \widehat{q_{ij}} - q_{ij} \right|, \left| \widehat{q_{ij}} + q_{ij} \right| \right)$, resulting in a consistent relative rotation system in a quaternion representation $q_{ij}$.

Phase two to solve camera orientations involves solving a minimization problem to find the three degrees of freedom for all the camera rotations represented by quaternions for a more accurate and less noisy initial guess using the consistent relative quaternions from the quaternion norm $min \sum_{ij \epsilon E} \left| \widetilde{q_i} - q_{ij} \cdot \widetilde{q_j} \right|^2$. In general, quaternions that represent rotations are of unit length.

To solve the minimization problem, the quaternion norm equation (e.g., $min \sum_{ij \epsilon E} \left| \widetilde{q_i} - q_{ij} \cdot \widetilde{q_j} \right|^2$) is solved such that $\left| \widetilde{q_i} \right| = 1$ for all $i$. The quaternion norm equation is difficult to solve without an initial guess. An initial guess is generated for a simplified quaternion norm equation (e.g., $min \sum_{ij \epsilon E} \left| \widetilde{q_i} - q_{ij} \cdot \widetilde{q_j} \right|^2$) is solved such that $\left| \widetilde{q_i} \right| = constant\ value$ through a SVD decomposition technique

Phase three to solve camera orientations is a variant used to solve the minimization problem to find the three degrees of freedom for all the camera rotations represented by quaternions $min_i \sum_{ij \epsilon E} \rho \left( \left| \widetilde{q_i} - q_{ij} \cdot \widetilde{q_j} \right|^2 \right)$. Again, adding the norm constraint $min \sum_{ij \epsilon E} \rho \left( \left| \widetilde{q_i} - q_{ij} \cdot \widetilde{q_j} \right|^2 \right)$ such that $\left| \widetilde{q_i} \right| = 1$ for all $i$. This non-convex optimization uses quaternion parametrization and loss function $\rho$ such as soft $L_1$ loss. The loss function is crucial in decreasing the phenomenon of outliers. The solution is defined up to a global rotation, so the first (or any other) rotation is fixed to be identity to achieve a unique global minimum. Resulting with global rotation per camera $q_i$, measured from the first camera.

To solve for camera locations, the absolute translations are found in a coordinate system where the location of the first (or any other) camera is (0,0,0) and the distance to the second camera (or any other) is 1 in arbitrary units.

After the global rotations are known, the relative translations are attained by decoupling the global rotations from the relative translation: $t_{ij} \sim (c_i - c_j)$. It is necessary to find the camera centers $c_i$. Therefore, an optimization problem is solved, for example, the following energy is devised:

$$: \sum_{ij \in E} \rho \left( \left| \widehat{t_{ij}} \times (c_i - c_j) \right|^2 \right)$$

where $\widehat{t_{ij}}$ is the relative translation with unit length, and $\rho$ is a loss function such as soft $L_1$ loss.

While an example manner of implementing the position and orientation calculator 110 of FIG .1 is illustrated in FIG. 3, one or more of the elements, processes and/or devices illustrated in FIG. 3 may be combined, divided, re-arranged, omitted, eliminated and/or implemented in any other way. Further, the example homography calculator 302, the example relative rotation, relative translation, surface normal decomposer 304, the example outlier remover 306, the example minimization solver 308, and/or, more generally, the example position and orientation calculator 110 of FIG. 3 may be implemented by hardware, software, firmware and/or any combination of hardware, software and/or firmware. Thus, for example, any of the example homography calculator 302, the example relative rotation, relative translation, surface normal decomposer 304, the example outlier remover 306, the example minimization solver 308, and/or, more generally, the example position and orientation calculator 110 of FIG. 3 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example homography calculator 302, the example relative rotation, relative translation, surface normal decomposer 304, the example outlier remover 306, and/or the example minimization solver 308 is/are hereby expressly defined to include a non-transitory computer readable storage device or storage disk such as a memory, a digital versatile disk (DVD), a compact disk (CD), a Blu-ray disk, etc. including the software and/or firmware. Further still, the example position and orientation calculator 110 of FIG. 1 may include one or more elements, processes and/or devices in addition to, or instead of, those illustrated in FIG. 3, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

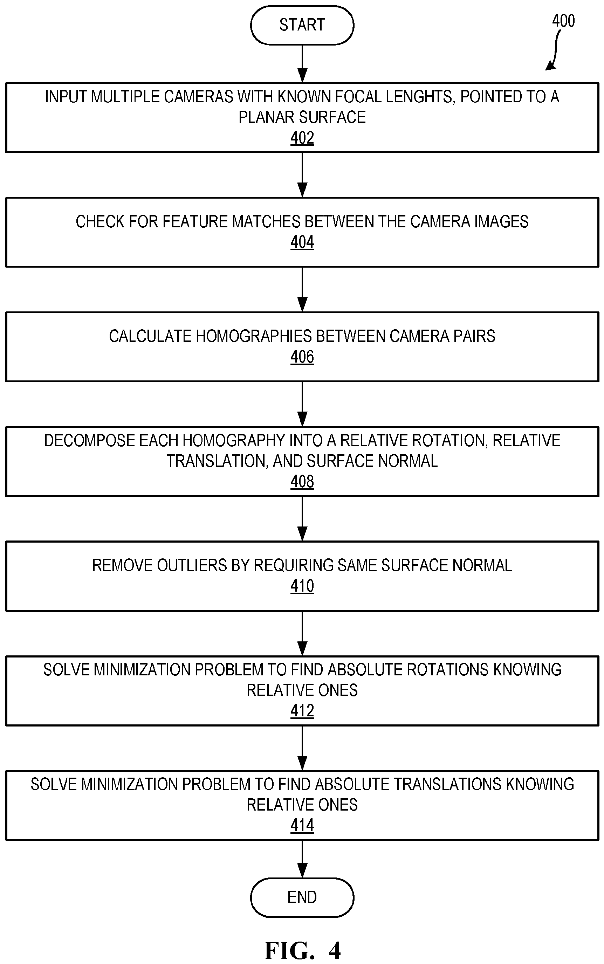

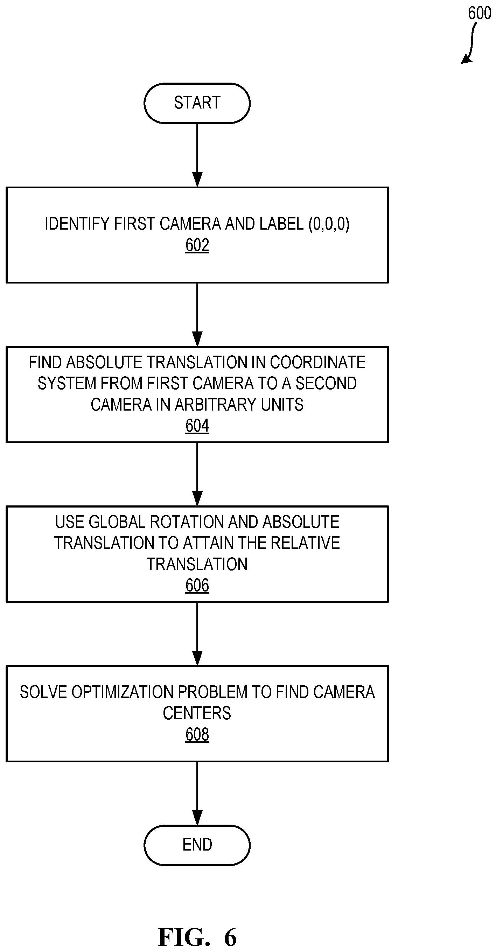

Flowcharts representative of example hardware logic, machine readable instructions, hardware implemented state machines, and/or any combination thereof for implementing the image processor 806 is shown in FIGS. 4-6. The machine readable instructions may be one or more executable programs or portion(s) of an executable program for execution by a computer processor and/or processor circuitry, such as the processor 812 shown in the example processor platform 800 discussed below in connection with FIG. 6. The program may be embodied in software stored on a non-transitory computer readable storage medium such as a CD-ROM, a floppy disk, a hard drive, a DVD, a Blu-ray disk, or a memory associated with the processor 812, but the entire program and/or parts thereof could alternatively be executed by a device other than the processor 812 and/or embodied in firmware or dedicated hardware. Further, although the example program is described with reference to the flowcharts illustrated in FIGS. 4-6, many other methods of implementing the example image processor 806 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more devices (e.g., a multi-core processor in a single machine, multiple processors distributed across a server rack, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement one or more functions that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 4-6 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

FIG. 4 is a flowchart representative of machine-readable instructions 400 that may be executed to solve multiple-camera calibration without an initial guess you need to obtain the positions and orientations (total six degrees of freedom for each camera) of multiple cameras.

There are many applications that require precise calibration of multiple cameras, for example autonomous driving, robot navigation/interaction with the surroundings, and a full 3D reconstruction for creating free dimensional videos. One of the main tasks required for rendering a scene from a virtual camera, is to obtain the exact extrinsic calibration parameters of each camera. Once the cameras focal lengths are known, this allows it to automatically obtain the positions and orientations, hence, saving manpower and obtaining much better accuracy. Furthermore, this method can be applied while in use, for example it can be applied while a game being broadcasted, instead of previous methods which would compute calibration between games. This further gives the ability to broadcast multiple events simultaneously.

At block 402, the camera orientation calibrator 108, inputs multiple cameras with known focal lengths (in pixels), pointed to a plane surface. An example of multiple-camera calibration without an initial guess involves first grabbing a synchronized shot from all the cameras in the scene, where the focal lengths are approximately known.

Theoretically, each camera image must obtain at least 4 features (to construct homography with another cameras), but for numerical stability, it demands at least 8 features per camera image. Features from different cameras agree (matching features) if they are looking at the same three-dimensional point. In some examples, a pair of cameras agree if there are at least 8 features that agree. In other examples, a pair of cameras agree by proxy if there exists a path of agreeing cameras between the two cameras. The matches must satisfy the connectivity condition: all (or a majority of) pairs of cameras must agree by proxy. The features extraction and their matching can be obtained by manual stabbing, an automated method of feature detection and matching, or any other method.

At block 404, the camera orientation calibrator 108 checks for features matches between the camera images.

At block 406, the position and orientation calculator 110 calculates homographies between camera pairs.

At block 408, the position and orientation calculator 110 decomposes each homography into a relative rotation, relative translation, and surface normal.

At block 410, the position and orientation calculator 110 removes outliers by requiring the same surface normal.

At block 412, the position and orientation calculator 110 solves a minimization problem to find absolute rotations knowing relative ones.

At block 414, the position and orientation calculator 110 solves a minimization problem to find absolute translations knowing relative ones. The output of position and orientation calculator 110 will go to virtual image generator 112, which will generate a virtual image that can be sent to AR/VR/MR set 114.

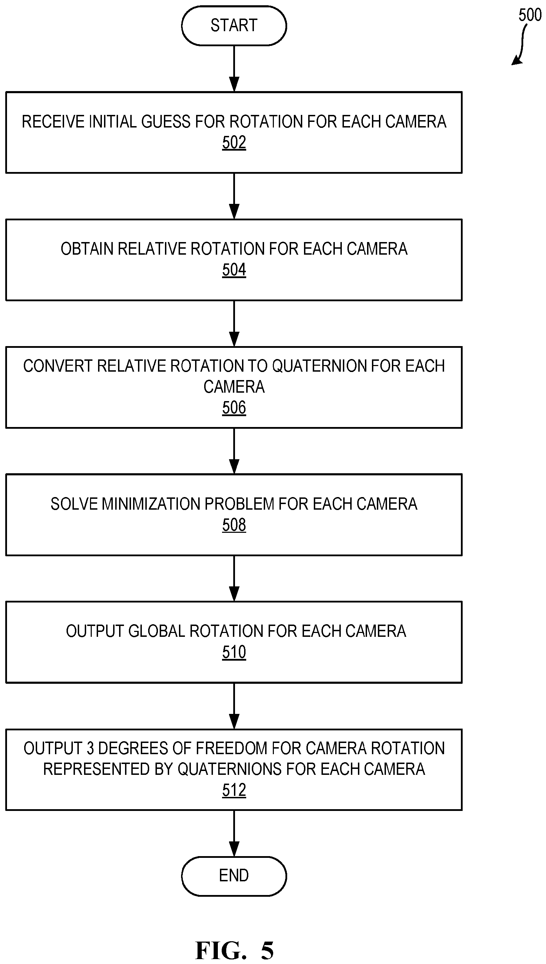

FIG. 5 is a flowchart representative of machine-readable instructions 500 that may be executed to implement camera orientation solving. At block 502, the example camera orientation calibrator 108, receives an initial guess for rotation for each camera.

At block 504, the example homography calculator 302, obtains relative rotation for each camera from the example camera orientation calibrator 108.

At block 506, the example position and orientation calculator 110 converts relative rotation to quaternion for each camera and removes outliers with the example outlier remover 306.

At block 508, the example minimization solver 308, solves the minimization problem for each camera.

At block 510, the example position and orientation calculator 110, outputs global rotation for each camera.

At block 512, the position and orientation calculator 110, outputs 3 degrees of freedom for each camera rotation represented by quaternions for each camera. Camera orientations are used to map cameras and calibrate multiple cameras without an initial guess. The example machine-readable instructions 500 end.

FIG. 5 is a flowchart representative of machine-readable instructions 600 that may be executed to implement solving camera locations. At block 602, the example position and orientation calculator 110 uses the homography calculator 302 to identify the example first camera and label the example first camera (0,0,0).

At block 604, the relative rotation, relative translation, surface normal decomposer 304, finds absolute translation in coordinate system from an example first camera to a an example second camera in arbitrary units.

At block 606, the relative rotation, relative translation, surface normal decomposer 304, uses global rotation and absolute translation to attain the relative translation as well as use the outlier remover 306 to remove outliers.

At block 608, the example position and orientation calculator 110, solves an optimization problem to find camera centers. Finding camera centers is used for camera locations, which are mapped to calibrate multiple cameras without an initial guess. The example instructions end.

FIG. 7 is a diagram of the connectivity and edges between each camera in the scene 700. A graph must be defined where the vertices are the cameras as shown in FIG. 7. A vertex 702 and a second vertex 706 can create an edge 704 between two cameras exists if the two cameras agree. The graph should be connected (e.g., there is a path from each camera to every other camera). The connectivity of the graph is equivalent to the connectivity condition. The edges are created in the edge creator 316.

For each edge (e.g., pair of cameras with at least 8 matches) the homography between matches of the points is solved for on the images plane. Due to the facts that all the cameras are looking at the same plane and their transformation is between images plane coordinates, the homography can be written as: $H = \gamma(R + t \cdot n^T)$, where $y$ is an arbitrary non-zero number, R is the relative rotation from first camera to second one, t is the relative camera displacement from the first camera to the second camera in the rotated space, scaled proportionally, and n is the plane normal from the frame system of the first camera.

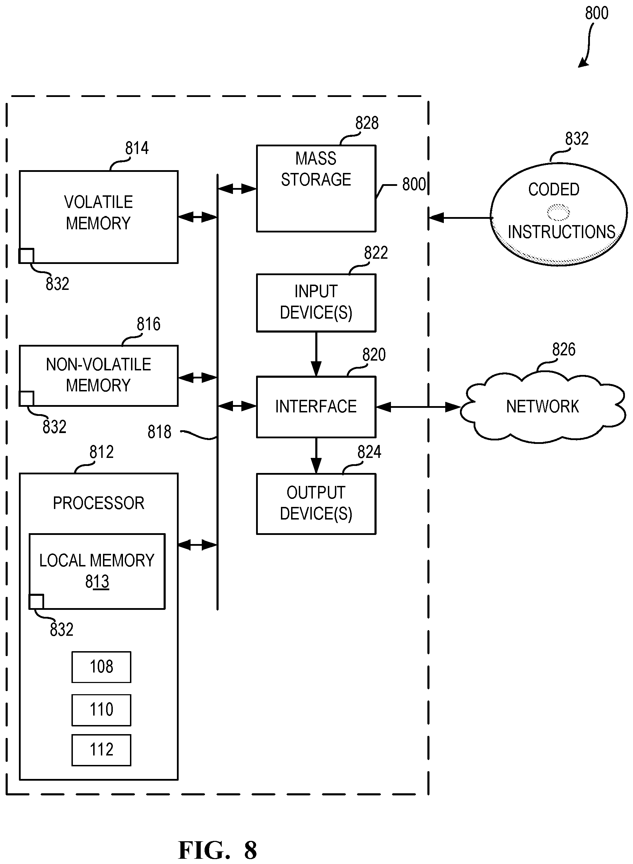

FIG. 8 is a block diagram of an example processor platform 800 structured to execute the instructions of FIGS 4, 5, 6 to implement the apparatus of FIGS. 1, 2, 3. The processor platform 800 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, a DVD player, a CD player, a digital video recorder, a Blu-ray player, a gaming console, a personal video recorder, a set top box, a headset or other wearable device, or any other type of computing device.

The processor platform 800 of the illustrated example includes a processor 812. The processor 812 of the illustrated example is hardware. For example, the processor 812 can be implemented by one or more integrated circuits, logic circuits, microprocessors, GPUs, DSPs, or controllers from any desired family or manufacturer. The hardware processor may be a semiconductor based (e.g., silicon based) device. In this example, the processor 812 implements the example camera orientation calibrator 108, the example position and orientation calculator 110, and the example virtual image generator 112.

The processor 812 of the illustrated example includes a local memory 813 (e.g., a cache). The processor 812 of the illustrated example is in communication with a main memory including a volatile memory 814 and a non-volatile memory 816 via a bus 818. The volatile memory 814 may be implemented by Synchronous Dynamic Random Access Memory (SDRAM), Dynamic Random Access Memory (DRAM), RAMBUS® Dynamic Random Access Memory (RDRAM®) and/or any other type of random access memory device. The non-volatile memory 816 may be implemented by flash memory and/or any other desired type of memory device. Access to the main memory 814, 816 is controlled by a memory controller.

The processor platform 800 of the illustrated example also includes an interface circuit 820. The interface circuit 820 may be implemented by any type of interface standard, such as an Ethernet interface, a universal serial bus (USB), a Bluetooth® interface, a near field communication (NFC) interface, and/or a PCI express interface.

In the illustrated example, one or more input devices 822 are connected to the interface circuit 820. The input device(s) 822 permit(s) a user to enter data and/or commands into the processor 812. The input device(s) 822 can be implemented by, for example, an audio sensor, a microphone, a camera (still or video), a keyboard, a button, a mouse, a touchscreen, a track-pad, a trackball, an isopoint device, and/or a voice recognition system.

One or more output devices 824 are also connected to the interface circuit 820 of the illustrated example. The output devices 824 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 820 of the illustrated example, thus, typically includes a graphics driver card, a graphics driver chip and/or a graphics driver processor.

The interface circuit 820 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 826. The communication can be via, for example, an Ethernet connection, a digital subscriber line (DSL) connection, a telephone line connection, a coaxial cable system, a satellite system, a line-of-site wireless system, a cellular telephone system, etc.

The processor platform 800 of the illustrated example also includes one or more mass storage devices 828 for storing software and/or data. Examples of such mass storage devices 828 include floppy disk drives, hard drive disks, compact disk drives, Blu-ray disk drives, redundant array of independent disks (RAID) systems, and digital versatile disk (DVD) drives.

The machine executable instructions 832 of FIGS 4, 5, and/or 6 may be stored in the mass storage device 828, in the volatile memory 814, in the non-volatile memory 816, and/or on a removable non-transitory computer readable storage medium such as a CD or DVD.

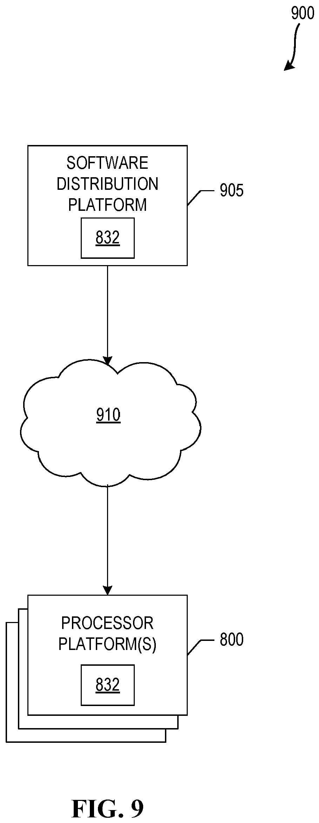

A block diagram illustrating an example software distribution platform 905 to distribute software such as the example computer readable instructions 832 of FIG. 8 to third parties is illustrated in FIG. 9. The example software distribution platform 905 may be implemented by any computer server, data facility, cloud service, etc., capable of storing and transmitting software to other computing devices. The third parties may be customers of the entity owning and/or operating the software distribution platform. For example, the entity that owns and/or operates the software distribution platform may be a developer, a seller, and/or a licensor of software such as the example computer readable instructions 832 of FIG. 8. The third parties may be consumers, users, retailers, OEMs, etc., who purchase and/or license the software for use and/or re-sale and/or sub-licensing. In the illustrated example, the software distribution platform 905 includes one or more servers and one or more storage devices. The storage devices store the computer readable instructions 832, which may correspond to the example computer readable instructions of FIGS. 4-6, as described above. The one or more servers of the example software distribution platform 905 are in communication with a network 910, which may correspond to any one or more of the Internet and/or any of the example network 104 of FIG. 1 described above. In some examples, the one or more servers are responsive to requests to transmit the software to a requesting party as part of a commercial transaction. Payment for the delivery, sale and/or license of the software may be handled by the one or more servers of the software distribution platform and/or via a third party payment entity. The servers enable purchasers and/or licensors to download the computer readable instructions 832 from the software distribution platform 905. For example, the software, which may correspond to the example computer readable instructions of FIGS. 4-6, may be downloaded to the example processor platform 800, which is to execute the computer readable instructions 832 to implement the image processor 106. In some examples, one or more servers of the software distribution platform 905 periodically offer, transmit, and/or force updates to the software (e.g., the example computer readable instructions 832 of FIG. 8) to ensure improvements, patches, updates, etc. are distributed and applied to the software at the end user devices.

From the foregoing, it will be appreciated that example methods, apparatus and articles of manufacture have been disclosed that calibrate multiple-cameras without an initial guess. The disclosed methods, apparatus and articles of manufacture improve the efficiency of using a computing device by providing a solution to using a planar environment and/or a cold start.

The methods and apparatus to solve multiple-camera calibration without an initial guess, as described herein, may be used in many different ways and may be incorporated into many different use cases. For example, the teachings of this disclosure have many applications in planar environments and cold start environments. A planar environment is a situation in which most of the scene being observed by multiple cameras is composed from at least one plane. In cases of planar environments, some multiple view algorithms are not feasibly used in such vision systems. A cold start environment is a situation in which sensors are not stationary or do not include auxiliary devices for localization such as inertial navigation system (INS). As such, the system does not have an initial guess for multiple-camera calibration.

The methods and apparatus to solve multiple-camera calibration without an initial guess, as described herein, cost less and do not have drift caused by poor indoors GPS reception as what can occur with a sensor-based approach to multiple-camera calibration, such as INS.

The methods and apparatus to solve multiple-camera calibration without an initial guess, as described herein, allows for the addition of cameras to the system and is more robust and stable than an additive bundle adjustment method.

This disclosed methods, apparatus and articles of manufacture automatically obtain the positions and orientations, hence, saving manpower and obtaining much better accuracy. Furthermore, this method can be applied while in use, for example it can be applied while a game being broadcasted, instead of previous methods which would compute calibration between games. This further gives the ability to broadcast multiple events simultaneously and without an initial guess. The disclosed methods, apparatus and articles of manufacture are accordingly directed to one or more improvement(s) in the functioning of a computer.

Example methods, apparatus, systems, and articles of manufacture to perform multiple camera calibration are disclosed herein. Further examples and combinations thereof include the following:

Example 1 includes a method perform camera calibration, the method comprising calculating a homography for a camera pair, the homography created using common image plane coordinate matches of identified features and identified focal lengths of cameras of the camera pair, decomposing the homography to identify relative translations, relative rotations, and surface normals, solving a minimization equation for camera centers of the cameras, and calibrating the cameras using cameras positions and orientations.

Example 2 includes the method of example 1, wherein the method further includes removing other cameras that do not have the same surface normal as the other cameras.

Example 3 includes the method of example 1, wherein the method further includes setting a first camera as point (0,0,0) in a coordinate plane.

Example 4 includes the method of example 1, wherein the method further includes generating an image combining feeds of the cameras to create an immersive reality.

Example 5 includes the method of example 1, wherein the method further includes utilizing a quaternion to represent the relative rotation and an absolute rotation in a coordinate system.

Example 6 includes the method of example 5, wherein the method further includes utilizing an initial guess for the rotation obtained by a Hamiltonian path to overcome a sign ambiguity of the quaternion.

Example 7 includes the method of example 1, wherein the method further includes solving an optimization problem to find the camera centers using relative translations, the relative translations calculated by decoupling global rotations.

Example 8 includes an apparatus comprising a homography calculator to calculate a homography for a camera pair, the homography created using common image plane coordinate matches of identified features and identified focal lengths of cameras of the camera pair, a relative rotation, relative translation, surface normal decomposer to decompose the homography to identify relative translations, relative rotations, and surface normals, a minimization solver to solve a minimization equation for camera centers of the cameras, and a position and orientation calculator to calibrate the cameras using cameras positions and orientations.

Example 9 includes the apparatus of example 8, wherein the position and orientation calculator is to remove other cameras that do not have the same surface normal as the other cameras.

Example 10 includes the apparatus of example 8, further including a camera orientation calibrator to set a first camera as point (0,0,0) in a coordinate plane.

Example 11 includes the apparatus of example 8, further including a virtual image generator to generate an image combining feeds of the cameras to create an immersive reality.

Example 12 includes the apparatus of example 8, wherein the minimization solver is to utilize a quaternion to represent the relative rotation and an absolute rotation in a coordinate system.

Example 13 includes the apparatus of example 12, wherein the minimization solver is to utilize an initial guess for the rotation obtained by a Hamiltonian path to overcome a sign ambiguity of the quaternion.

Example 14 includes the apparatus of example 8, wherein the minimization solver is to solve an optimization problem to find the camera centers using relative translations, the relative translations calculated by decoupling global rotations.

Example 15 includes a non-transitory computer readable medium comprising instructions that, when executed cause a machine to at least calculate a homography for a camera pair, the homography created using common image plane coordinate matches of identified features and identified focal lengths of cameras of the camera pair, decompose the homography to identify relative translations, relative rotations, and surface normals, solve a minimization equation for camera centers of the cameras, and calibrate the cameras using cameras positions and orientations.

Example 16 includes the non-transitory computer readable medium of example 15, wherein the instructions, when executed, cause the machine to remove other cameras that do not have the same surface normal as the other cameras.

Example 17 includes the non-transitory computer readable medium of example 15, wherein the instructions, when executed, cause the machine to set a first camera as point (0,0,0) in a coordinate plane.

Example 18 includes the non-transitory computer readable medium of example 15, wherein the instructions, when executed, cause the machine to generate an image combining feeds of the cameras to create an immersive reality.

Example 19 includes the non-transitory computer readable medium of example 15, wherein the instructions, when executed, cause the machine to utilize a quaternion to represent the relative rotation and an absolute rotation in a coordinate system.

Example 20 includes the non-transitory computer readable medium of example 19, wherein the instructions, when executed, cause the machine to utilize an initial guess for the rotation obtained by a Hamiltonian path to overcome a sign ambiguity of the quaternion.

Example 21 includes the non-transitory computer readable medium of example 15, wherein the instructions, when executed, cause the machine to solve an optimization problem to find the camera centers using relative translations, the relative translations calculated by decoupling global rotations.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

The following claims are hereby incorporated into this Detailed Description by this reference, with each claim standing on its own as a separate embodiment of the present disclosure.

**Claims**

1. A method perform camera calibration, the method comprising:

   calculating a homography for a camera pair, the homography created using common image plane coordinate matches of identified features and identified focal lengths of cameras of the camera pair; decomposing the homography to identify relative translations, relative rotations, and surface normals;
   solving a minimization equation for camera centers of the cameras; and
   calibrating the cameras using cameras positions and orientations.

2. The method of claim 1, wherein the method further includes removing other cameras that do not have the same surface normal as the other cameras.

3. The method of any preceding claim, wherein the method further includes setting a first camera as point (0,0,0) in a coordinate plane.

4. The method of any preceding claim, wherein the method further includes generating an image combining feeds of the cameras to create an immersive reality.

5. The method of any preceding claim, wherein the method further includes utilizing a quaternion to represent the relative rotation and an absolute rotation in a coordinate system.

6. The method of claim 5, wherein the method further includes utilizing an initial guess for the rotation obtained by a Hamiltonian path to overcome a sign ambiguity of the quaternion.

7. The method of any preceding claim, wherein the method further includes solving an optimization problem to find the camera centers using relative translations, the relative translations calculated by decoupling global rotations.

8. An apparatus comprising:

a homography calculator to calculate a homography for a camera pair, the homography created using common image plane coordinate matches of identified features and identified focal lengths of cameras of the camera pair; a relative rotation, relative translation, surface normal decomposer to decompose the homography to identify relative translations, relative rotations, and surface normals; a minimization solver to solve a minimization equation for camera centers of the cameras; and a position and orientation calculator to calibrate the cameras using cameras positions and orientations.

9. The apparatus of claim 8, wherein the position and orientation calculator is to remove other cameras that do not have the same surface normal as the other cameras.

10. The apparatus of claim 8 or claim 9, further including a camera orientation calibrator to set a first camera as point (0,0,0) in a coordinate plane.

11. The apparatus of one of claims 8-10, further including a virtual image generator to generate an image combining feeds of the cameras to create an immersive reality.

12. The apparatus of one of claims 8-11, wherein the minimization solver is to utilize a quaternion to represent the relative rotation and an absolute rotation in a coordinate system.

13. The apparatus of claim 12, wherein the minimization solver is to utilize an initial guess for the rotation obtained by a Hamiltonian path to overcome a sign ambiguity of the quaternion.

14. The apparatus of one of claims 8-13, wherein the minimization solver is to solve an optimization problem to find the camera centers using relative translations, the relative translations calculated by decoupling global rotations.

15. A computer-readable medium comprising machine-readable instructions that, when executed, cause a machine to at least implement a method or realize an apparatus as claimed in any preceding claim.

101

102A          102B          102C

100

103

102D          102E          102F

104          NETWORK

106

CAMERA ORIENTATION CALIBRATOR
108

POSTION AND ORIENTATION CALCULATOR
110

VIRTUAL IMAGE GENERATOR
112

AR/VR/MR SET
114

**FIG. 1**

TO/FROM 104

108

202

FOCAL LENGTH
RECEIVER
210

MANUAL LABEL
POINT RECEIVER
216

PLANE SURFACE
CALCULATOR
212

FEATURE MATCHER
RECEIVER
214

CALIBRATION DATA SENDER
206

TO 110

FIG. 2

FROM 108

110

HOMOGRAPHY CALCULATOR
302

DATA
RECEIVER
310

FEATURE
OBTAINER
312

FEATURE
COMPARER
314

EDGE
CREATOR
316

RELATIVE ROTATION, RELATIVE
TRANSLATION, SURFACE NORMAL
DECOMPOSER
304

OUTLIER REMOVER
306

MINIMIZATION SOLVER
308

TO 112

FIG. 3

START

400

INPUT MULTIPLE CAMERAS WITH KNOWN FOCAL LENGHTS, POINTED TO A
PLANAR SURFACE
402

CHECK FOR FEATURE MATCHES BETWEEN THE CAMERA IMAGES
404

CALCULATE HOMOGRAPHIES BETWEEN CAMERA PAIRS
406

DECOMPOSE EACH HOMOGRAPHY INTO A RELATIVE ROTATION, RELATIVE
TRANSLATION, AND SURFACE NORMAL
408

REMOVE OUTLIERS BY REQUIRING SAME SURFACE NORMAL
410

SOLVE MINIMIZATION PROBLEM TO FIND ABSOLUTE ROTATIONS KNOWING
RELATIVE ONES
412

SOLVE MINIMIZATION PROBLEM TO FIND ABSOLUTE TRANSLATIONS KNOWING
RELATIVE ONES
414

END

FIG. 4

START

500

RECEIVE INITIAL GUESS FOR ROTATION FOR EACH CAMERA
502

OBTAIN RELATIVE ROTATION FOR EACH CAMERA
504

CONVERT RELATIVE ROTATION TO QUATERNION FOR EACH
CAMERA
506

SOLVE MINIMIZATION PROBLEM FOR EACH CAMERA
508

OUTPUT GLOBAL ROTATION FOR EACH CAMERA
510

OUTPUT 3 DEGREES OF FREEDOM FOR CAMERA ROTATION
REPRESENTED BY QUATERNIONS FOR EACH CAMERA
512

END

FIG. 5

600

START

IDENTIFY FIRST CAMERA AND LABEL (0,0,0)
602

FIND ABSOLUTE TRANSLATION IN COORDINATE
SYSTEM FROM FIRST CAMERA TO A SECOND
CAMERA IN ARBITRARY UNITS
604

USE GLOBAL ROTATION AND ABSOLUTE
TRANSLATION TO ATTAIN THE RELATIVE
TRANSLATION
606

SOLVE OPTIMIZATION PROBLEM TO FIND CAMERA
CENTERS
608

END

**FIG. 6**

FIG. 7

FIG. 8

900

SOFTWARE
DISTRIBUTION
PLATFORM

905

832

910

PROCESSOR
PLATFORM(S)

800

832

**FIG. 9**

Europäisches
Patentamt

European
Patent Office

Office européen
des brevets

# EUROPEAN SEARCH REPORT

Application Number

EP 21 19 8752

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG XI ET AL: "Relative Pose Estimation and Planar Reconstruction via Superpixel-Driven Multiple Homographies", 2020 IEEE/RSJ INTERNATIONAL CONFERENCE ON INTELLIGENT ROBOTS AND SYSTEMS (IROS), 24 October 2020 (2020-10-24), pages 10625-10632, XP55898754, DOI: 10.1109/IROS45743.2020.9341707 ISBN: 978-1-7281-6212-6 | 1-4, 7-11,14, 15 | INV. G06T7/80 |
| Y | * abstract * <br> * page 10626 - page 10630 * | 5,6,12, 13 | |
| Y | CARLONE LUCA ET AL: "Initialization techniques for 3D SLAM: A survey on rotation estimation and its use in pose graph optimization", 2015 IEEE INTERNATIONAL CONFERENCE ON ROBOTICS AND AUTOMATION (ICRA), IEEE, 26 May 2015 (2015-05-26), pages 4597-4604, XP033169050, DOI: 10.1109/ICRA.2015.7139836 [retrieved on 2015-06-29] | 5,6,12, 13 | |
| A | * abstract * <br> * page 4599 * | 1-4, 7-11,14, 15 | TECHNICAL FIELDS SEARCHED (IPC) <br><br> G06T |

The present search report has been drawn up for all claims

| Place of search | Date of completion of the search | Examiner |
|---|---|---|
| Munich | 9 March 2022 | Millet, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)